# EUROPÄISCHE PATENTSCHRIFT

(11) **EP 0 548 575 B1**
(45) Veröffentlichungstag und Bekanntmachung des Hinweises auf die Patenterteilung: **28.01.1998**
(21) Anmeldenummer: 92120135.6
(22) Anmeldetag: 26.11.1992
(51) Int. Cl.: H05K 5/00, H02J 7/00

(54) **Haltevorrichtung für batteriebetriebene Elektrogeräte mit einer Anschlusskupplung an eine Stromquelle**
Holder for battery powered electric device with connection to a power source
Dispositif de maintien d'un appareil électrique alimenté par pile avec une connexion à une source d'alimentation

(30) Priorität: 20.12.1991 DE 4142159
(43) Veröffentlichungstag der Anmeldung: 30.06.1993
(73) Patentinhaber: Braun Aktiengesellschaft, Frankfurt am Main (DE)
(72) Erfinder: Odemer, Michael, W-6000 Frankfurt am Main 50 (DE); Ullmann, Roland, W-6050 Offenbach-Rumpenheim (DE); Wild, Bernhard, W-6240 Königstein/Ts. (DE)

(56) Entgegenhaltungen:
- DE-U- 8 012 410
- FR-A- 1 436 155
- GB-A- 2 072 438
- US-A- 4 536 694

## Beschreibung

Die Erfindung betrifft eine Haltevorrichtung für batteriebetriebene Elektrogeräte, wie z. B. Rasierapparate, Haarschneidemaschinen, Massagegeräte, Zahnbürsten, Bohrmaschinen, Handschrauber oder dergleichen, die wenigstens eine aufladbare Speicherzelle aufweisen. Neben den Halteelementen ist die Haltevorrichtung mit einem Kupplungsstück für die elektrische Kontaktierung des Elektrogerätes mit einer Stromquelle zum Zwecke des Aufladens der Speicherzelle ausgestattet.

Es sind Haltevorrichtungen für elektrisch angetriebene Kleingeräte bekannt (DE 80 12 410 U1), z. B. für Rasierapparate, bei denen der batteriebetriebene Rasierapparat in einer formschlüssigen Aufnahme vertikal abgestellt werden kann, wobei Steckerstifte an der Unterseite im Rasierapparat in eine Gerätesteckdose eingreifen, die sich passend am Gerätehalter befindet. Gegenüber der Kupplungsseite zum Rasierapparat ist in der Baueinheit der Gerätesteckdose ein Gerätestecker angeordnet. An diesen Gerätestecker kann eine Netzkabel-Steckdose angesteckt werden. Mit dem Gerätehalter ist es möglich, ein batteriebetriebenes Gerät, hier ein Rasierapparat, ungehindert anschlußfrei bzw. kabellos zu benutzen und ohne sonstige Vorkehrungen während des Nichtbenutzens die Speicherzelle des Elektrogerätes innerhalb der Gerätehalterung wieder aufzuladen.

Der Vorteil dieser Einrichtung besteht insbesondere darin, daß ein Elektrogerät ständig nachgeladen werden kann und damit die Speicherzelle des Elektrogeräts praktisch zu jeder Benutzung ihren vollen Ladezustand aufweist. Andererseits bleiben bei diesen bekannten Gerätehaltern die Elektrogeräte bzw. deren nachzuladende Speicherzellen zum Teil unnötig lange am Netz angeschlossen. Deshalb muß bei Verwendung einer solchen Einrichtung zwingend ein Überladeschutz für die Speicherzelle vorgesehen werden. Aber auch bei eingebautem Uberladeschutz ist nicht zu vermeiden, daß ständig ein geringer Strom zur Zelle fließt. Diese Verhältnisse sind bei den üblichen Nickel-Cadmium-Batterien nicht vorteilhaft, aber auch nicht weiter schädlich. Wenn statt der Nickel-Cadmium-Zellen aber z.B. die Cadmium-freien Nickelhydridzellen eingesetzt werden sollen, kann diese ständige auch nur geringe Nachladung zur Schädigung und im Extremfall zur Überhitzung und zum Zerstören der Nickelhydridzellen führen. Dem Benutzer müßte empfohlen werden, das Netzkabel nur dann an den Gerätehalter anzustecken, wenn die Speicherzelle nachgeladen werden soll. Gerade solche Anweisungen an den Benutzer bergen das Problem in sich, daß sie nicht beachtet bzw. nicht befolgt werden oder das Netzkabel in der Zeit, in der es nicht benutzt wird, verlegt werden kann, was insgesamt nicht benutzerfreundlich ist.

Der Erfindung liegt die Aufgabe zugrunde, für batteriebetriebene Elektrogeräte wie z. B. Haarschneidemaschinen, Massagegeräte, Zahnbürsten, Bohrmaschinen, Handschrauber oder dergleichen, die wenigstens eine aufladbare Speicherzelle aufweisen, eine Haltevorrichtung zu schaffen, die Halteelemente und ein Kupplungsstück für das Laden der Speicherzelle des Elektrogerätes aufweist, wobei das Kupplungsstück aus Gerätestecker(n) und/oder Gerätesteckdose(n) für die elektrische Kontaktierung des Elektrogerätes einerseits mit einer Stromquelle andererseits besteht, ohne daß zwangsläufig ein ständiges Nachladen der Speicherzelle erfolgt. Diese Aufgabe wird nach der Erfindung dadurch gelöst, daß ohne Trennung der Verbindung zwischen Haltevorrichtung und Stromquelle die Aufladung der Speicherzelle des Elektrogeräts unterbindbar ist, entweder durch Trennung oder Abdeckung, des Kupplungsstückes gegenüber dem Elektrogerät, oder durch Ermöglichen von mindestens zwei verschiedenen Abstellagen des Elektrogeräts, wobei in mindestens einer Abstellage keinerlei Verbindung zur dem Kupplungsstück besteht, so daß das Elektrogerät ohne Verbindung zu Stromquelle in der Haltevorrichtung aufbewahrt werden kann.

In weiterer Fortgestaltung wird die Aufgabe zweckmäßigerweise mit einer Haltevorrichtung gelöst, die neben den Halteelementen ein Kupplungsstück für die elektrische Kontaktierung des Elektrogerätes einerseits mit einer elektrischen Zuleitung bzw. eine Strom quelle andererseits aufweist, bei der eine mechanisch bewegbare Sperreinrichtung vorhanden ist, die zwischen dem Elektrogerät und dem Kupplungsstück derart angeordnet werden kann, daß keine elektrische Verbindung zwischen dem Elektrogerät und dem Kupplungsstück möglich ist.

Die Sperreinrichtung ist vorteilhafterweise mit der Haltevorrichtung beweglich verbunden. Lose eingelegte Sperreinrichtungen, z. B. Kappen, die über das Kupplungsstück gelegt werden, sind ebenfalls möglich; sie haben aber den Nachteil, daß sie verloren gehen können.

Die Haltevorrichtung kann auch bei gleichen Grundelementen wie bei der vorgenannten Lösung Führungselemente zur Lagerung des Elektrogerätes aufweisen, die die Halterung des Elektrogerätes in mindestens zwei Lagen innerhalb der Halterung gestatten, wobei das Elektrogerät nur in einer Lage mit dem Kupplungsstück für die elektrische Kontaktierung in Kontakt kommt.

Eine weitere Lösung ist darin zu sehen, daß die Haltevorrichtung bei gleichartigen Grundelementen wie bei den vorgenannten Lösungen einen elektrischen Schalter aufweist, der manuell betätigt werden kann und wahlweise den Stromfluß innerhalb des Kupplungsstückes frei gibt oder unterbricht.

Jede der aufgezeigten Lösungen gewährleistet eine sichere Halterung des Elektrogerätes während der Nichtbenutzung bei wahlweisem Anschluß der aufladbaren Speicherzelle des Elektrogerätes über ein Kupplungsstück zur elektrischen Kontaktierung an eine Stromquelle. In allen Fällen kann die elektrische Zuleitung, z. B. ein Kabel, ständig mit einer Netzsteckdose oder einer anderen Stromquelle und der Haltevorrichtung verbunden bleiben. Damit entfällt das häufige Anstecken der Kabelsteckdose an das Kupplungsstück, was bei häufigem und unvorsichtigem, nicht-schonenden Gebrauch des Steckers z. B. zu Kabelbrüchen in Nähe des Steckers führen kann.

Der besondere Vorteil besteht darin, daß der Nutzer das Elektrogerät grundsätzlich so in der Haltevorrichtung aufbewahren kann, daß keine Verbindung mit dem Kupplungsstück und damit zur Stromquelle besteht. Erst wenn der Nutzer merkt, daß die elektrische Speicherzelle erheblich entladen ist, z. B. durch eine entsprechende optische oder akustische Anzeige am Elektrogerät, kann er das Elektrogerät so in die Haltevorrichtung einlegen, daß es über das Kupplungsstück für die elektrische Kontaktierung mit der Stromquelle verbunden ist, bzw. er stellt die elektrische Verbindung durch Betätigung des Schalters absichtlich her.

Weitere Vorteile und Einzelheiten ergeben sich aus den nachfolgenden Ausführungsbeispielen und der Zeichnung, in der einige bevorzugte Ausführungen dargestellt sind.

Es zeigt:
Figur 1 eine Haltevorrichtung mit mechanisch zu betätigendem Sperrbügel;
Figur 2 einen beidseitig zu betätigenden Sperriegel für eine Haltevorrichtung;
Figur 3 eine Haltevorrichtung, bei der das Sperrelement axial zur Kupplungssteckdose bewegt wird;
Figur 4 eine Haltevorrichtung mit unterschiedlichen Lageanordnungen des batteriebetriebenen Elektrogerätes und
Figur 5 eine Haltevorrichtung mit einem elektrischen Schalter.

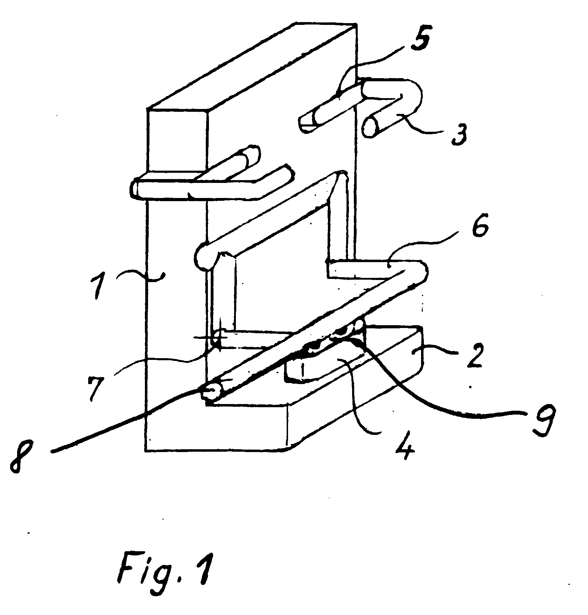

Die Haltevorrichtung in Figur 1 besteht aus einem Wandelement 1, einem mit diesem baulich verbundenen unteren Abstützelement 2 und Haltelementen 3. Diese Haltevorrichtung kann in an sich bekannter Art abgestellt oder an einer Wand befestigt werden. Das untere Abstützelement 2 weist einen Ansatz 9 mit einer Gerätesteckdose 4 auf, in die die Steckerstifte eines im Beispiel nicht dargestellten Elektrogerätes eingreifen. Ein in diese Haltevorrichtung eingestelltes Elektrogerät, z. B. ein Rasierapparat, wird somit sowohl von dem Ansatz 9 mit der Gerätesteckdose 4 als auch von den Halteelementen 3 gehaltert. Die Halteelemente 3 sind bügelartig in beidseitig angeordneten Führungen 5 verschiebbar im Wandelement 1 angeordnet, derart, daß sie durch Verschieben an verschiedene Elektrogeräte, die in der Haltevorrichtung gehaltert werden sollen, angepaßt werden können.

Die Gerätesteckdose 4 ist Teil eines Kupplungsstückes, welches unterhalb des Abstützelements 2 Steckerstifte aufweist, in die eine Kabelsteckdose eingesteckt werden kann, die ihrerseits mit dem Stromnetz verbunden ist. Wenn das Elektrogerät in die Haltevorrichtung ohne den nachfolgend beschriebenen Sperrbügel 6 gestellt wird, dann kommt es zu einer elektrischen Verbindung der im Elektrogerät eingebauten aufladbaren Speicherzelle mit der Stromquelle und diese wird aufgeladen. In bekannter Weise besitzen die aufladbaren Elektrogeräte Schutzeinrichtungen, damit ein Uberladen vermieden wird. Dennoch bleibt das Gerät immer an die Stromquelle angeschlossen und es fließt auch immer ein geringer Strom nach. Dieses geringe und nicht vermeidbare Nachladen kann nach längerer Zeit bei den Speicherzellen unter Umständen zu Uberhitzungen und zur Beschädigung führen.

Erfindungsgemäß weist die Haltevorrichtung einen Sperrbügel 6 auf, der im Wandelement 1 an den Gelenkpunkten 7 drehbar gelagert ist. Der Sperrbügel 6 ist derart gelagert, daß er durch seine Schwerkraft immer nach vorn fällt und unmittelbar auf dem Ansatz 9 bzw. der Gerätesteckdose 4 zur Auflage kommt. Wenn das Elektrogerät in die Haltevorrichtung eingestellt wird, dann sitzt es grundsätzlich auf dem Sperrbügel 6 auf. Eine Verbindung der Steckerstifte im Elektrogerät und der Gerätesteckdose 4 wird verhindert. Die Speicherzelle im Elektrogerät kann somit nicht aufgeladen werden. Erst wenn der Benutzer des Elektrogerätes z. B. mittels einer Kontrollampe feststellt, daß die Speicherzelle des Elektrogerätes nachgeladen werden muß, hat er die Möglichkeit, den Sperrbügel 6 durch Betätigung des Betätigungselementes 8 in die Ebene des Wandelementes 1 zu verschwenken und das Elektrogerät danach unmittelbar über den Ansatz 9 auf die Gerätesteckdose 4 aufzusetzen. In dieser Stellung wird die Speicherzelle des Elektrogerätes mit der Stromquelle in Verbindung gebracht und die Aufladung erfolgt bis das Gerät wieder aus der Haltevorrichtung entnommen wird. Vorteilhafterweise ist die untere Seite des Elektrogerätes derart gestaltet, daß es auf dem Sperrbügel 6 einen sicheren seitlichen Halt hat.

Mit dieser erfindungsgemäßen Haltevorrichtung ist es möglich, das Elektrogerät ohne zusätzlich erforderliche Handlung in die Haltevorrichtung einzustellen, ohne daß eine Kontaktierung der aufladbaren Speicherzelle mit einer Stromquelle möglich ist. Damit entfällt grundsätzlich die Gefahr einer unerwünschten Daueraufladung der Speicherzelle mit möglichen schädlichen Folgen. Das in der Zeichnung nicht dargestellte Verbindungskabel zwischen dem Kupplungsstück und der Stromquelle kann ständig an der Haltevorrichtung angeschlossen bleiben. Die erneute Aufladung der Speicherzelle des Elektrogerätes erfolgt immer nur, wenn bewußt der Sperrbügel 6 von der Gerätesteckdose 4 wegbewegt wird.

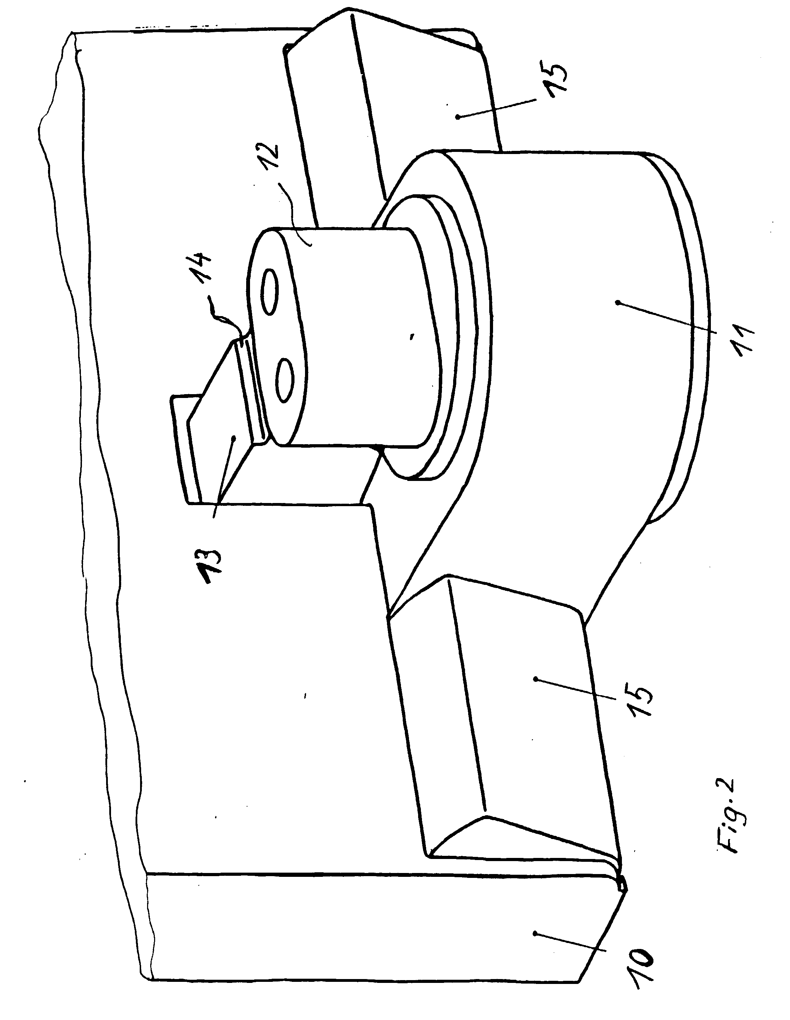

In Figur 2 ist eine erfindungsgemäße Sperreinrichtung mit einem Sperriegel 13 dargestellt. Die Haltevorrichtung weist wieder ein Wandelement 10 auf, an welchem ein Abstützelement 11 angeordnet ist. In dieses Abstützelement 11 ist ein elektrisches Kupplungsstück integriert, welches an der oberen Seite eine Gerätesteckdose 12 und an der unteren Seite, in der Figur nicht dargestellt, einen Gerätestecker aufweist. In den Gerätestecker kann in bekannter Weise eine Kabelsteckdose eingesteckt werden, die andererseits über ein Netzkabel mit einer Stromquelle verbunden ist. Der Sperriegel 13 ist im Wandelement 10 gelagert und stützt sich federbelastet gegen die Gerätesteckdose 12 ab. In der Berührungsebene des Sperriegels 13 mit der Gerätesteckdose 12 ist in den Sperriegel 13 eine Vertiefung 14 eingearbeitet, in die ein Gegenstück an dem Elektrogerät, welches in die Haltevorrichtung eingestellt wird, zur sicheren Lageorientierung eingreift. Wenn das Elektrogerät in die Haltevorrichtung eingestellt wird, sitzt es auf dem Sperriegel 13 auf und sein Gerätestecker kann nicht mit der Gerätesteckdose 12 in Verbindung kommen. Wenn der Benutzer des Elektrogerätes die Speicherzelle nachladen will, dann muß er eine der beiden beidseitig des Vorbaues 11 angeordneten Betätigungselemente 15 drücken, damit der Sperriegel 13 von der Gerätesteckdose 12 weg in das Wandelement 10 hineinbewegt wird.

Die Betätigungselemente 15 sind mit dem federbelasteten Sperriegel 13 verbunden. Erst wenn der Sperriegel 13 von der Gerätesteckdose 12 wegbewegt wurde, kann das Elektrogerät auf die Gerätesteckdose 12 aufgesteckt werden und der Gerätestecker des Elektrogerätes kommt mit der Gerätesteckdose 12 in elektrischen Kontakt. Die nachladbare Speicherzelle des Elektrogerätes wird geladen. Sobald das Elektrogerät wieder aus der Haltevorrichtung entnommen wird, bewegt sich der Sperriegel 13 durch seine Federbeaufschlagung wieder in seine Sperrlage. Der Benutzer muß auch in diesem Beispiel bewußt durch Betätigung eines der Betätigungselemente 15 den Ladevorgang der Speicherzelle auslösen.

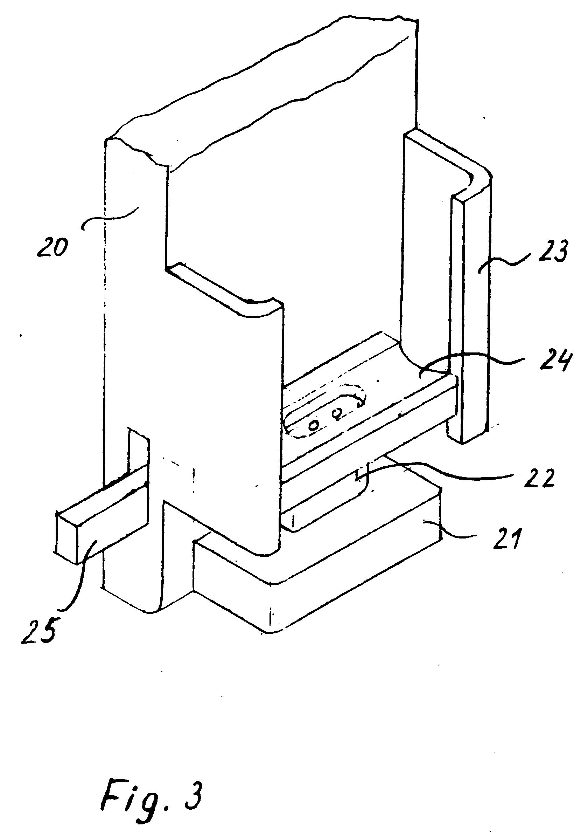

Figur 3 zeigt eine Haltevorrichtung mit einem Wandelement 20, einem Abstützelement 21 und Halteelementen 23. Eine Gerätesteckdose 22 ist in einem Kupplungsstück angeordnet, welches in das Abstützelement 21 integriert ist und andererseits einen nicht dargestellten Gerätestecker aufweist. Die Gerätesteckdose 22 wird von einer Sperrauflage 24 umschlossen. Diese Sperrauflage 24 ist im Wandelement 20 über einen Kniehebel federnd gelagert und kann mittels des Betätigungselementes 25 gegenüber der Gerätesteckdose 22 auf und ab bewegt werden. Die Sperrauflage 24 ist so gestaltet, daß das Elektrogerät, welches in die Haltevorrichtung eingestellt wird, einen guten Halt hat. Wenn das Betätigungselement 25 nach unten gedrückt wird, dann bewegt sich die Sperrauflage 24 nach oben und der Gerätestecker im Elektrogerät kommt nicht mit der Gerätesteckdose 22 in Kontakt. Wird das Betätigungselement 25 nach oben gedrückt, dann bewegt sich die Sperrauflage 24 gegenüber der Gerätesteckdose 22 nach unten und der Gerätestecker im Elektrogerät wird beim Einstellen in die Gerätesteckdose 22 eingeführt. Die Speicherzelle im Elektrogerät wird geladen.

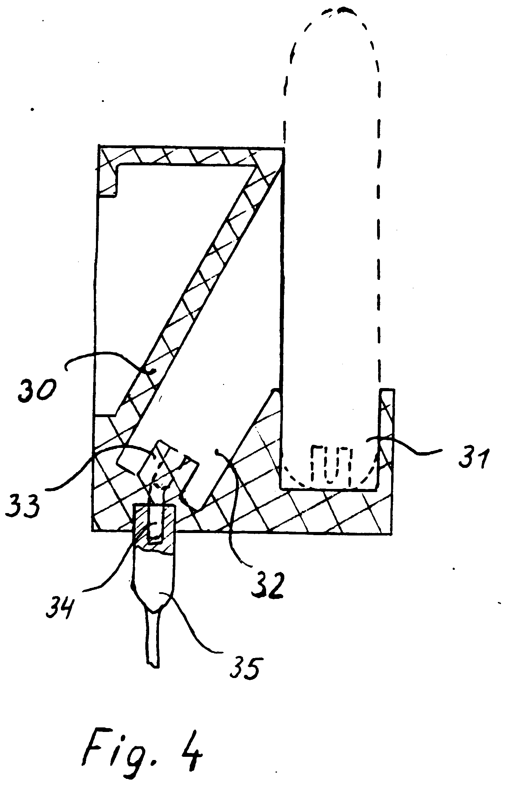

Figur 4 zeigt eine Haltevorrichtung, die zwei verschiedene Abstellagen des Elektrogerätes ermöglicht. In dem Gehäuse 30 der Haltevorrichtung, vorzugsweise ein Kunststoffspritzteil, sind eine erste Aufnahme 31 und eine zweite Aufnahme 32 eingeformt. Die erste Aufnahme 31 weist keinerlei Verbindung zu einer Stromquelle auf. In den Boden der Aufnahme 32 ist dagegen ein Kupplungsstück zur elektrischen Kontaktierung der Speicherzelle des Elektrogerätes mit einer Stromquelle angeordnet. Dieses Kupplungsstück weist innerhalb der Aufnahme 32 eine Gerätesteckdose 33 und andererseits einen Gerätestecker 34 auf. Auf den Gerätestecker 34 kann eine Kabelsteckdose 35 aufgesteckt werden. Mit dieser erfindungsgemäßen Haltevorrichtung hat der Nutzer die Wahlmöglichkeit, das Elektrogerät senkrecht in die erste Aufnahme 31 oder schräg in die zweite Aufnahme 32 einzustellen. Während die Speicherzelle im Elektrogerät in der Aufnahme 31 nicht mit einer Stromquelle kontaktiert wird, erfolgt dies durch Einstellen des Elektrogerätes in die Aufnahme 32.

Eine Abwandlung der in Figur 4 dargestellten Lösung besteht darin, daß das Elektrogerät, wenn die Speicherzelle nicht aufgeladen werden soll, in einer ähnlichen Aufnahme wie die Aufnahme 31 gehaltert wird und, wenn die Speicherzelle geladen werden soll, das Elektrogerät in seiner Achse, vorzugsweise um 90 ° verdreht in eine Aufnahme gestellt wird, die die Aufnahme 31 kreuzt und tiefer liegt als diese und in der eine Gerätesteckdose, ähnlich der Gerätesteckdose 33, integriert ist. Beim Einstellen des Elektrogerätes in diese Aufnahme kommt der Gerätestecker des Elektrogerätes mit der Gerätesteckdose in Kontakt und die Speicherzelle wird geladen.

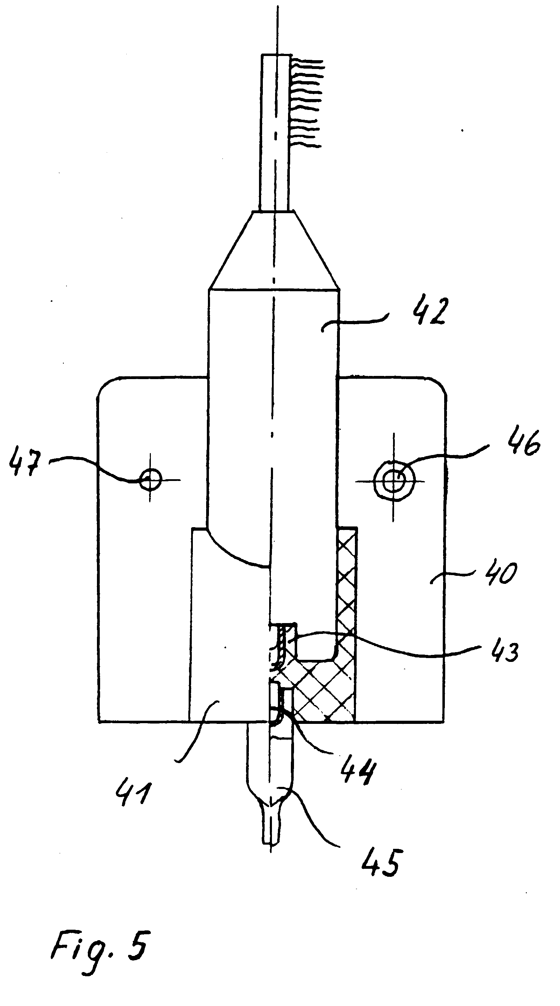

Figur 5 zeigt eine Haltevorrichtung für eine elektrische Zahnbürste. Ein Wandelement 40 weist ein hülsenartiges Abstützelement 41 auf, in das die elektrische Zahnbürste 42 eingesteckt wird. Integriert in das Abstützelement 41 ist zur Kontaktierung der Zahnbürste 42 eine Gerätesteckdose 43 und andererseits ein Gerätestecker 44 zur Kontaktierung mit einer Kabelsteckdose 45.

Erfindungswesentlich ist hierbei, daß die Gerätesteckdose 43 und der Gerätestecker 44 nur über einen elektrischen Schalter, im Beispiel über einen Druckschalter 46, miteinander verbunden werden können. Die einzelnen Leitungsverbindungen sind wegen der Ubersichtlichkeit der Zeichnung nicht näher dargestellt. In den Stromkreis zwischen der Gerätesteckdose 43 und dem Gerätestecker 44 über den Druckschalter 46 ist noch eine Kontrollampe 47 eingeschaltet, an der ersichtlich ist, wenn die Speicherzelle der Zahnbürste 42 geladen wird. Wenn die Speicherzelle der Zahnbürste 42 einen normalen Ladezustand aufweist, wird die Zahnbüste 42 lediglich in die Hülse 41 eingesteckt. Eine elektrische Kontaktierung mit einer Stromquelle findet nicht statt, weil der Druckschalter 46 nicht betätigt wurde. Erst wenn der Nutzer feststellt, daß die Speicherzelle der Zahnbürste 42 nachgeladen werden muß, betätigt er nach dem Einstellen der Zahnbürste 42 in die Hülse 41 den Druckschalter 46, wodurch die elektrische Verbindung zwischen der Gerätesteckdose 43 und dem Gerätestecker 44 hergestellt wird. Gleichzeitig leuchtet die Kontrollampe 47 auf und erinnert den Nutzer daran, daß die Zahnbürste 42 zur Zeit aufgeladen wird. Zweckmäßigerweise sollte eine weitere Einrichtung vorgesehen werden, bei der der Schalter 46 bei jeder Entnahme der Zahnbürste 42 auf Stromunterbrechung geschaltet wird (nicht dargestellt in der Zeichnung).

Alle erfindungsgemäßen Lösungen zeigen, daß die Haltevorrichtungen so ausgelegt sind, daß bei normaler Ablage der Elektrogeräte keine Aufladung der Speicherzellen erfolgt. Immer erst wenn der Nutzer mit einer absichtlichen Handlung die an der Haltevorrichtung vorgesehenen Sperrelemente außer Betrieb setzt bzw. den Stromfluß absichtlich herstellt, wird die Speicherzelle des Elektrogerätes mit dem elektrischen Kupplungsstück bzw. mit einer Stromquelle kontaktiert. Diese Lösungen vermeiden mit hoher Sicherheit die Uberladung der Speicherzellen und damit deren Schädigung. Andererseits kann die Kabelverbindung von der Haltevorrichtung zur Stromquelle, z. B. zu einem Netzstecker, ständig mit der Haltevorrichtung in Verbindung bleiben. Damit ist eine sehr benutzerfreundliche Aufbewahrung geschaffen und es werden im Extremfall Kabelbrüche durch häufiges Ein- und Ausstecken der Kabelstecker vermieden.

## Patentansprüche

1. Haltevorrichtung für batteriebetriebene Elektrogeräte, wie z. B. Rasierapparate, Haarschneidemaschinen, Massagegeräte, Zahnbürsten, Bohrmaschinen, Elektroschrauber oder dergleichen, welche wenigstens eine aufladbare Speicherzelle aufweisen, in der neben Halteelementen ein Kupplungsstück bestehend aus mindestens einem Gerätestecker und/oder mindestens einer Gerätesteckdose für die elektrische Kontaktierung des Elektrogerätes einerseits und einer Stromquelle andererseits angeordnet ist, wobei ohne Trennung der Verbindung zwischen Haltevorrichtung und Stromquelle die Aufladung der Speicherzelle des Elektrogeräts unterbindbar ist, dadurch gekennzeichnet, daß dieses Unterbinden der Aufladung entweder durch Trennung oder Abdeckung des Kupplungsstückes gegenüber dem Elektrogerät geschieht, oder durch Ermöglichen von mindestens zwei verschiedenen Abstellagen des Elektrogeräts geschieht, wobei in mindestens einer Abstellage keinerlei Verbindung zu dem Kupplungsstück besteht, so daß das Elektrogerät ohne Verbindung zur Stromquelle in der Haltevorrichtung aufbewahrt werden kann.

2. Haltevorrichtung nach Anspruch 1, dadurch gekennzeichnet, daß eine mechanisch bewegbare Sperreinrichtung (6, 13, 24) vorgesehen ist, die das Kupplungsstück gegenüber dem Elektrogerät trennt oder abdeckt, so daß keine elektrische Verbindung zwischen dem Elektrogerät und dem Kupplungsstück möglich ist und daß die Sperreinrichtung (6, 13, 24) manuell derart vom Kupplungsstück entfernt werden kann, daß das Elektrogerät mit dem Kupplungsstück in elektrischen Kontakt kommt.

3. Haltevorrichtung nach Anspruch 2, dadurch gekennzeichnet, daß die Sperreinrichtung (6, 13, 24) in der Haltevorrichtung beweglich gelagert ist.

4. Haltevorrichtung nach Anspruch 2, dadurch gekennzeichnet, daß die Sperreinrichtung (6, 13, 24) manuell bewegbar ist.

5. Haltevorrichtung nach Anspruch 2, dadurch gekennzeichnet, daß die Sperreinrichtung (13) federbelastet ist, wobei sie im Sperrzustand das Kupplungsstück gegenüber dem Elektrogerät abdeckt.

6. Haltevorrichtung nach Anspruch 3, dadurch gekennzeichnet, daß die Sperreinrichtung (6) derart beweglich gelagert ist, daß sie im Sperrzustand durch die Schwerkraft das Kupplungsstück gegenüber dem Elektrogerät abdeckt.

7. Haltevorrichtung nach einem der Ansprüche 2 bis 6, dadurch gekennzeichnet, daß die Sperreinrichtung aus einem in der Haltevorrichtung schwenkbar gelagerten Sperrbügel (6) besteht.

8. Haltevorrichtung nach einem der Ansprüche 2 bis 6, dadurch gekennzeichnet, daß die Sperreinrichtung aus einem in der Haltevorrichtung schwenkbar gelagerten Sperriegel (13) besteht.

9. Haltevorrichtung nach einem der Ansprüche 2 bis 8, dadurch gekennzeichnet, daß das Elektrogerät in dem Sperrzustand der Sperreinrichtung auf der Sperreinrichtung aufsitzten kann.

10. Haltevorrichtung nach Anspruch 2, dadurch gekennzeichnet, daß das Kupplungsstück in der Haltevorrichtung fest angeordnet ist, die Sperreinrichtung eine Sperrauflage (24) ist, die das Kupplungsstück umschließt und gegenüber dem Kupplungsstück in axialer Richtung der Kupplungselemente verschiebbar und arretierbar angeordnet ist und daß das Elektrogerät auf der Sperrauflage lagerbar ist, derart, daß das Elektrogerät wahlweise durch Verschieben der Sperrauflage mit dem Kupplungsstück kontaktiert werden kann.

11. Haltevorrichtung nach einem der vorhergehenden Ansprüche 2 bis 10, dadurch gekennzeichnet, daß die Sperreinrichtung mindestens ein Betätigungselement (8, 15, 25) aufweist.

12. Haltevorrichtung nach Anspruch 10, dadurch gekennzeichnet, daß die Sperreinrichtung - von der Bedienungsseite aus gesehen - links- und rechtsseitig der Haltevorrichtung je ein Betätigungselement (15) aufweist.

13. Haltevorrichtung nach Anspruch 1, dadurch gekennzeichnet, daß die Haltevorrichtung Führungselemente zur Lagerung des Elektrogerätes aufweist, die die Halterung des Elektrogerätes in mindestens zwei Abstellagen innerhalb der Haltevorrichtung gestatten, wobei das Elektrogerät nur in einer Abstellage mit dem Kupplungsstück in Kontakt kommen kann.

14. Haltevorrichtung nach Anspruch 13, dadurch gekennzeichnet, daß als Führungselemente mindestens zwei Aufnahmen vorhanden sind, wobei eine erste Aufnahme (31) das Elektrogerät vorzugsweise vertikal haltern kann und kein Kupplungsstück aufweist und daß eine zweite Aufnahme (32) ein Kupplungsstück aufweist und von der vertikalen Lage abweicht, wobei in dieser Lage das Elektrogerät mit dem Kupplungsstück kontaktiert werden kann.

15. Haltevorrichtung nach Anspruch 13, dadurch aekennzeichnet, daß die Haltevorrichtung Halteelemente für die vertikale Halterung des Elektrogerätes aufweist, derart, daß das Elektrogerät in mindestens zwei verschiedenen, um seine vertikale Achse verdrehte Lagen gehaltert werden kann, wobei die Kontaktierung des Elektrogerätes mit dem Kupplungsstück nur in einer Lage möglich ist.

16. Haltevorrichtung nach Anspruch 1, dadurch gekennzeichnet, daß das Kupplungsstück elektrisch mit einem Schalter (46) verbunden ist, der in den Stromkreis zwischen Geräterseckdose (43) und Gerätestecker (44) angeordnet ist und manuell betätigt werden kann und wahlweise den Stromfluß freigibt oder unterbricht.

17. Haltevorrichtung nach einem der vorhergehenden Ansprüche, dadurch gekennzeichnet, daß die Haltevorrichtung aus einem Wandelement (1, 10, 20, 40) oder einem Gehäuse (30), Halteelementen (3, 23) oder Aufnahmen (31, 32) für das Elektrogerät, die dieses mindestens teilweise umschließen, einem an der Haltevorrichtung fest angeordnetem Kupplungsstück und einer Sperreinrichtung (6, 13, 24) besteht.

18. Haltevorrichtung nach Anspruch 17, dadurch gekennzeichnet, daß das Kupplungsstück in einem Abstützelement (2, 11, 21, 41) am Wandelement (1, 10, 20, 40) angeordnet ist.

19. Haltevorrichtung nach Anspruch 17 oder 18, dadurch gekennzeichnet, daß das Kupplungsstück auf der dem Elektrogerät zugewandten Seite eine Gerätesteckdose (4, 12, 22, 33, 43) und auf der gegenüberliegenden Seite einen Gerätestecker (34, 44) aufweist.

20. Haltevorrichtung nach Anspruch 18, dadurch gekennzeichnet, daß das Kupplungsstück in das Abstützelement (2, 11, 41) eingeformt ist.

21. Haltevorrichtung nach Anspruch 17 oder 18, dadurch gekennzeichnet, daß die Sperreinrichtung im Wandelement (1, 10, 20, 40) oder im Abstützelement angeordnet bzw. gelagert ist.

22. Haltevorrichtung nach einem der vorangegangenen Ansprüche, dadurch gekennzeichnet, daß die Halteelemente (3) in der Haltevorrichtung verschiebbar oder austauschbar angeordnet sind und wahlweise an unterschiedliche Elektrogeräte angepaßt werden können bzw. angepaßt sind.

23. Haltevorrichtung nach Anspruch 22, dadurch gekennzeichnet, daß die Halteelemente (3) Haltebügel sind und im Wandelement (1) der Haltevorrichtung verschiebbar angeordnet sind.

24. Haltevorrichtung nach Anspruch 22, dadurch gekennzeichnet, daß die Halteelemente (3) in einer Vielzahl von Lagen arretiert werden können.

## Claims

1. A a holding device for battery-powered electrical appliances as, for example, shavers, hair cutters, massagers, toothbrushes, drills, electric screwdrivers or the like, which include at least one rechargeable storage cell and in which, in addition to retaining members, a coupling means is arranged comprising at least one connector plug and/or at least one connector socket for establishing electrical contact between the electrical appliance on the one side and a source of power on the other side, in which recharging of the storage cell of the electrical appliance is interruptible without disconnecting the connection between the holding device and the source of power, characterized in that such interruption of the recharging operation occurs either by separating the coupling means from the electrical appliance or covering it, or by the enabling of at least two different storage positions for the electrical appliance, in at least one storage position no connection existing with the coupling means, so that the electrical appliance can be stored in the holding device without being connected to the source of power.

2. The holding device as claimed in claim 1, characterized in that a mechanically movable interlocking device (6, 13, 24) is provided which separates the coupling means from the electrical appliance or covers it, such as to prevent an electrical connection from being made between the electrical appliance and the coupling means, and that the interlocking device (6, 13, 24) is manually removable from the coupling means such as to allow electrical contact between the electrical appliance and the coupling means.

3. The holding device as claimed in claim 2, characterized in that the interlocking device (6, 13, 24) is movably mounted in the holding device.

4. The holding device as claimed in claim 2, characterized in that the interlocking device (6, 13, 24) is manually movable.

5. The holding device as claimed in claim 2, characterized in that the interlocking device (13) is spring-loaded, covering in the locked position the coupling means relative to the electrical appliance.

6. The holding device as claimed in claim 3, characterized in that the interlocking device (6) is movably mounted such as to cover in the locked position the coupling means relative to the electrical appliance under the influence of gravity.

7. The holding device as claimed in any one of the claims 2 to 6, characterized in that the interlocking device is comprised of an interlocking clip structure (6) pivotally mounted in the holding device.

8. The holding device as claimed in any one of the claims 2 to 6, characterized in that the interlocking device is comprised of an interlocking tongue structure (13) pivotally mounted in the holding device.

9. The holding device as claimed in any one of the claims 2 to 8, characterized in that the electrical appliance is able to sit on the interlocking device when the interlocking device is in the locked condition.

10. The holding device as claimed in claim 2, characterized in that the coupling means is fixedly disposed in the holding device, that the interlocking device is an interlocking bearing member (24) enclosing the coupling means and being slidably and lockably arranged relative to the coupling means in the axial direction of the coupling members, and that the electrical appliance is able to sit on the interlocking bearing member such as to enable the electrical appliance to be selectively contacted with the coupling means by displacement of the interlocking bearing member.

11. The holding device as claimed in any one of the preceding claims 2 to 10, characterized in that the interlocking device includes at least one control element (8, 15, 25).

12. The holding device as claimed in claim 10, characterized in that the interlocking device includes one control element (15) each on the left and right hand side of the holding device, when viewed from the operator's end.

13. The holding device as claimed in claim 1, characterized in that the holding device includes guiding means for supporting the electrical appliance, to enable the electrical appliance to be held in at least two storage positions within the holding device, electrical contact of the electrical appliance with the coupling means being possible in only one storage position.

14. The holding device as claimed in claim 13, characterized in that at least two receptacles are provided as guiding means, whereof a first receptacle (31) is able to hold the electrical appliance preferably vertically and has no coupling means, and that a second receptacle (32) includes a coupling means and deviates from the vertical position, this position enabling the electrical appliance to contact the coupling means.

15. The holding device as claimed in claim 13, characterized in that the holding device includes retaining members for vertically holding the electrical appliance, such as to enable the electrical appliance to be held in at least two different positions turned about its vertical axis, with the electrical appliance being able to contact the coupling means in only one position.

16. The holding device as claimed in claim 1, characterized in that the coupling means is electrically connected to a switch (46) which is inserted in the circuit between the connector socket (43) and the connector plug (44) and is actuatable manually and selectively releases or interrupts the flow of current.

17. The holding device as claimed in any one of the preceding claims, characterized in that the holding device is comprised of a wall structure (1, 10, 20, 40) or a housing (30), retaining members (3, 23) or receptacles (31, 32) for the electrical appliance which enclose the appliance at least in part, a coupling means fixedly disposed on the holding device, and an interlocking device (6, 13, 24).

18. The holding device as claimed in claim 17, characterized in that the coupling means is arranged in a supporting structure (2, 11, 21, 41) on the wall structure (1, 10, 20, 40).

19. The holding device as claimed in claim 17 or 18, characterized in that the coupling means includes a connector socket (4, 12, 22, 33, 43) on the side proximate to the electrical appliance and a connector plug (34, 44) on the opposite side.

20. The holding device as claimed in claim 18, characterized in that the coupling means is integrally formed in the supporting structure (2, 11, 41).

21. The holding device as claimed in claim 17 or 18, characterized in that the interlocking device is arranged or mounted in the wall structure (1, 10, 20, 40) or in the supporting structure.

22. The holding device as claimed in any one of the preceding claims, characterized in that the retaining members (3) are slidably or exchangeably arranged in the holding device and selectively can be conformed, or conform, to different electrical appliances.

23. The holding device as claimed in claim 22, characterized in that the retaining members (3) are bracket structures and are slidably arranged in the wall structure (1) of the holding device.

24. The holding device as claimed in claim 22, characterized in that the retaining members (3) are lockable in a plurality of positions.

## Revendications

1. Dispositif de maintien pour appareils électriques fonctionnant sur batterie, comme par exemple rasoirs électriques, tondeuses électriques, appareils électriques de massage, brosses à dents, perceuses, visseuses électriques ou analogues, qui présentent au moins une batterie rechargeable, dans lequel, à côté d'éléments de maintien, est disposée une pièce de connexion constituée d'au moins un connecteur mâle de l'appareil et/ou au moins un connecteur femelle de l'appareil pour la mise en contact électrique de l'appareil électrique d'une part et d'une source de courant d'autre part, la recharge de la batterie de l'appareil électrique pouvant être interrompue sans rupture de la liaison entre le dispositif de maintien et la source de courant, caractérisé par le fait que cette interruption de la recharge se fait soit par séparation ou recouvrement de la pièce de connexion vis à vis de l'appareil électrique, soit par mise à disposition d'au moins deux positions de pose, différentes, de l'appareil électrique, aucune liaison avec la pièce de connexion n'existant dans au moins une position de pose, de sorte que l'appareil électrique peut être rangé dans le dispositif de maintien sans liaison avec la source de courant.

2. Dispositif de maintien selon la revendication 1, caractérisé par le fait qu'est prévu un organe d'arrêt (6, 13, 24), mécaniquement mobile, qui sépare ou recouvre la pièce de connexion vis à vis de l'appareil électrique, de sorte qu'aucune liaison électrique entre l'appareil électrique et la pièce de connexions n'est possible et que l'organe d'arrêt (6, 13, 24) peut être manuellement écarté de la pièce de connexion de façon que l'appareil électrique vienne en contact électrique avec la pièce de connexion.

3. Dispositif de maintien selon la revendication 2, caractérisé par le fait que l'organe d'arrêt (6, 13, 24) est porté, mobile, dans le dispositif de maintien.

4. Dispositif de maintien selon la revendication 2, caractérisé par le fait que l'on peut mouvoir manuellement l'organe d'arrêt (6, 13, 24).

5. Dispositif de maintien selon la revendication 2, caractérisé par le fait que l'organe d'arrêt (13) est contraint par un ressort, étant précisé que c'est à l'état d'arrêt qu'il recouvre la pièce de connexion vis à vis de l'appareil électrique.

6. Dispositif de maintien selon la revendication 3, caractérisé par le fait que l'organe d'arrêt (6) est porté, mobile, de façon qu'à l'état d'arrêt il recouvre la pièce de connexion vis à vis de l'appareil électrique sous l'action de la pesanteur.

7. Dispositif de maintien selon l'une des revendications 2 à 6, caractérisé par le fait que l'organe d'arrêt est constitué d'un étrier d'arrêt (6) porté, avec liberté de pivotement, dans le dispositif de maintien.

8. Dispositif de maintien selon l'une des revendications 2 à 6, caractérisé par le fait que l'organe d'arrêt est constitué d'un pêne d'arrêt (13) porté, avec liberté de pivotement, dans le dispositif de maintien.

9. Dispositif de maintien selon l'une des revendications 2 à 8, caractérisé par le fait qu'à l'état d'arrêt de l'organe d'arrêt, l'appareil électrique peut reposer sur l'organe d'arrêt.

10. Dispositif de maintien selon la revendication 2, caractérisé par le fait que la pièce de connexion est disposée de façon fixe dans le dispositif de maintien, que l'organe d'arrêt est un support d'arrêt (24) qui entoure la pièce de connexion et qui est disposé avec liberté de coulissement, selon la direction axiale des éléments de connexion vis à vis de la pièce de connexion, et de blocage et que l'on peut poser l'appareil électrique sur le support d'arrêt de façon à pouvoir mettre à volonté l'appareil électrique en contact avec la pièce de connexion en faisant coulisser le support d'arrêt.

11. Dispositif de maintien selon l'une des revendications précédentes 2 à 10, caractérisé par le fait que l'organe d'arrêt présente au moins un élément de manoeuvre (8, 15, 25).

12. Dispositif de maintien selon la revendication 10, caractérisé par le fait que l'organe d'arrêt - vu depuis le côté de manoeuvre - présente un élément de manoeuvre (15) aussi bien du côté gauche que du côté droit du dispositif de maintien.

13. Dispositif de maintien selon l'une des revendications 2 à 8, caractérisé par le fait que le dispositif de maintien présente, pour la pose de l'appareil électrique, des éléments de guidage qui autorisent le maintien de l'appareil électrique dans au moins deux positions de pose à l'intérieur du dispositif de maintien, l'appareil électrique ne pouvant venir en contact avec la pièce de connexion que dans une position de pose.

14. Dispositif de maintien selon la revendication 13, caractérisé par le fait que comme éléments de guidage il y a au moins deux réceptacles, un premier réceptacle (31) pouvant de préférence maintenir vertical l'appareil électrique et ne présentant aucune pièce de connexion et qu'un second réceptacle (32) présente une pièce de connexion et s'écarte de la position verticale, l'appareil électrique pouvant venir en contact avec la pièce de connexion dans cette position.

15. Dispositif de maintien selon la revendication 13, caractérisé par le fait que le dispositif de maintien présente des éléments de maintien pour le maintien vertical de l'appareil électrique de façon telle que l'appareil électrique peut être maintenu dans au moins deux positions différentes, angulairement décalées autour de son axe vertical, la mise en contact de l'appareil électrique avec la pièce de connexion n'étant possible que dans une position.

16. Dispositif de maintien selon la revendication 1, caractérisé par le fait que la pièce de connexion est électriquement reliée avec un interrupteur (46) qui est disposé sur le circuit entre le connecteur femelle (43) de l'appareil et le connecteur mâle (44) de l'appareil, que l'on peut manoeuvrer manuellement et qui, au choix, autorise ou interrompt le passage du courant.

17. Dispositif de maintien selon l'une des revendications précédentes, caractérisé par le fait que le dispositif de maintien est constitué d'un élément de pose sur paroi (1, 10, 20, 40) ou d'un boîtier (30), d'éléments de maintien (3, 23) ou de réceptacles (31, 32) pour l'appareil électrique, qui entourent au moins partiellement celui-ci, d'une pièce de connexion disposée de façon fixe sur le dispositif de maintien et d'un organe d'arrêt (6, 13, 24).

18. Dispositif de maintien selon la revendication 17, caractérisé par le fait que la pièce de connexion est disposée dans un élément d'appui (2, 11, 21, 41) sur l'élément de pose sur paroi (1, 10, 20, 40).

19. Dispositif de maintien selon la revendication 17 ou 18, caractérisé par le fait que la pièce de connexion présente un connecteur femelle (4, 12, 22, 33, 43) de l'appareil du côté orienté vers l'appareil électrique et une connecteur mâle (34, 44) de l'appareil du côté opposé.

20. Dispositif de maintien selon la revendication 18, caractérisé par le fait que la pièce de connexion est insérée dans l'élément d'appui (2, 11, 41) au moulage.

21. Dispositif de maintien selon la revendication 17 ou 18, caractérisé par le fait que l'organe d'arrêt est disposé ou porté dans l'élément de pose sur paroi (1, 10, 20, 40) ou dans l'élément d'appui.

22. Dispositif de maintien selon l'une des revendications précédentes, caractérisé par le fait que les éléments de maintien (3) sont disposés avec liberté de coulissement dans le dispositif de maintien ou d'échange et peuvent être, ou sont, adaptés à volonté à des appareils électriques différents.

23. Dispositif de maintien selon la revendication 22, caractérisé par le fait que les éléments de maintien (3) sont des étriers de maintien et sont disposés avec liberté de coulissement dans l'élément de pose sur paroi (1) du dispositif de maintien.

24. Dispositif de maintien selon la revendication 22, caractérisé par le fait que les éléments de maintien (3) peuvent être bloqués dans une pluralité de positions.
